# EUROPÄISCHE PATENTSCHRIFT

(11) **EP 2 271 852 B1**
(45) Veröffentlichungstag und Bekanntmachung des Hinweises auf die Patenterteilung: **15.08.2012**
(21) Anmeldenummer: 09752116.5
(22) Anmeldetag: 03.11.2009
(51) Int. Cl.: F16C 33/66, F16C 33/80, F16J 15/00

(54) **VORRICHTUNG ZUR ABDICHTUNG EINER MIT EINEM FLÜSSIGEN SCHMIERMITTEL GESCHMIERTEN LAGERUNG**
DEVICE FOR SEALING A BEARING LUBRICATED WITH A LIQUID LUBRICANT
DISPOSITIF D'ÉTANCHÉITÉ D'UN PALIER LUBRIFIÉ PAR UN AGENT DE LUBRIFICATION LIQUIDE

(30) Priorität: 04.11.2008 DE 102008055793
(43) Veröffentlichungstag der Anmeldung: 12.01.2011
(73) Patentinhaber: Voith Patent GmbH, 89522 Heidenheim (DE)
(72) Erfinder: STARBATTY, Frank, 89522 Heidenheim (DE)
(74) Vertreter: Dr. Weitzel & Partner
(86) Internationale Anmeldenummer: PCT/EP2009/007843
(87) Internationale Veröffentlichungsnummer: WO 2010/051959

(56) Entgegenhaltungen:
- JP-A- 58 084 269
- US-A- 4 603 865
- US-A1- 2005 147 517
- W. Haas: "Berührungsfreies Abdichtenim Maschinenbau unter besonderer Berücksichtigung der Fanglabyrinthe" 10. Dezember 1997 (1997-12-10), Uni Stuttgart , Stuttgart 74 , XP002567317 ISBN: 3921920744 Abbildung 5.1 Seite 64; Abbildung 5.23 Absatz [5.2.4.2] Seite 66; Abbildung 5.24 Absatz [5.2.4.3] Absatz [5.2.2.2]
- HAAS W ET AL: "Dichtung mit ewigem Leben" KONSTRUKTION, SPRINGER VDI VERLAG, DUSSELDORF, DE, Nr. 7/8, 1. Juli 2007 (2007-07-01), Seiten 40-43, XP009128648 ISSN: 0720-5953 in der Anmeldung erwähnt

## Beschreibung

Die Erfindung betrifft eine Vorrichtung zur Abdichtung einer mit einem flüssigen Schmiermittel geschmierten Lagerung eines rotierenden Bauteils mit den im Oberbegriff von Anspruch 1 genannten Merkmalen. Eine pattungsbildende vorrichtung ist aus der Veröffentlichung von W. Haas: "Berührungsfreies Abdichten im Maschinenbau unter besonderer Berücksichtigung der Fanglabyrinthe", 10. Dezember 1997 (1997-12-10), Uni Stuttgart, Stuttgart 74, XP002567317 bekannt.

Allgemein gebräuchlich und üblich sind derartige Abdichtungen für rotierende Bauteile, insbesondere rotierende Wellen, welche in der Form von berührungslosen Labyrinthdichtungen ausgeführt sind. Diese bestehen dabei im Allgemeinen aus zwei oder mehr Dichtkammern, welche auch als Labyrinthkammern bezeichnet werden. Zwischen den Kammern ist jeweils ein einfacher oder mäanderförmiger Dichtspalt ausgebildet, welcher einerseits eine berührungslose Rotation des rotierenden Bauteils zulässt, und welcher andererseits einen Strömungswiderstand für das flüssige Schmiermittel darstellt. Die äußere Dichtkammer ist dann gegenüber der Umgebung mit der eigentlichen Labyrinthdichtung abgedichtet. Diese Labyrinthdichtung besteht aus einem Aufbau, welcher einen typischerweise immer mäanderförmigen Dichtspalt zwischen zwei berührungslos gegeneinander rotierenden Bauteilen ausbildet. Dabei haben alle Dichtkammern Abläufe, so dass sich in den Dichtkammern sammelndes flüssiges Schmiermittel über die Abläufe ins Gehäuse zurückgeführt werden kann. Aufgrund des im Bereich des Ablaufs deutlich geringeren Druckverlusts als der im Bereich des Dichtspalts, kommt es so zu einem Abfluss des flüssigen Schmiermittels zum größten oder annähernd vollständigen Teil durch den Ablauf, während durch den Dichtspalt kein oder nur eine minimale Menge an Schmiermittel in die Umgebung gelangt.

Die Gestaltung der Dichtkammern folgt im Allgemeinen gewissen Richtlinien, um eine entsprechende Funktionalität zu gewährleisten. Dies ist beispielsweise in der Fachzeitschrift Konstruktion Juli/August 7/8-2007 auf Seite 41 dargestellt und erläutert.

Insbesondere bei Lagerungen für Wellen mit einem großen Durchmesser von beispielsweise mehr als 300 mm und/oder schnelllaufenden Wellen mit einer Umfangsgeschwindigkeit am äußeren Umfang von typischerweise mehr als 30 m/s ergibt sich hier die besondere Problematik, dass ein Luft-FlüssigkeitsGemisch bzw. Luft-Schmiermittel-Gemisch von der hohen Umfangsgeschwindigkeit der Welle entsprechend mitgerissen wird, und es je nach Bauform des Ablaufs zu einem entsprechenden starken Rückstau im Ablauf kommt. Dieser Rückstau im Ablauf ist nachteilig kritisch, da er dazu führen kann, dass die Flüssigkeit oder das Luft-Schmiermittel-Gemisch durch den Dichtspalt der Labyrinthdichtung nach außen dringt, was jedoch unbedingt vermieden werden sollte.

Auf der oben genannten Seite 41 der Fachzeitschrift Konstruktion wird daher vorgeschlagen, den Ablauf entsprechend zu gestalten und diesen mit einer geeigneten Rücklaufsperre zu versehen, welche hier als "Zwickel" bezeichnet wird.

Konstruktive Untersuchungen haben gezeigt, dass ein entsprechender Aufbau gemäß dem Vorschlag in der oben genannten Fachzeitschrift zwar eine leichte Verbesserung bringt, dass jedoch bei sehr schnelllaufenden Wellen, insbesondere solchen mit großem Durchmesser, und dementsprechend hohen Umfangsgeschwindigkeiten immer noch ein deutlicher Rückstau an flüssigem Schmiermittel in der äußeren Dichtkammer auftritt, welcher zur entsprechenden Undichtheit der Lageranordnung führen kann. Insbesondere gilt dies bei Aufbauten, welche durch Wälzlagern in der sogenannten X-Anordnung gelagert sind, insbesondere dann, wenn durch Rollen- oder Kegellager eine zusätzliche Förderwirkung durch die Lager auftritt, so dass durch die Lager hindurch ein sehr großer Volumenstrom in eine innere Dichtkammer der Vorrichtung zum Abdichten der Lageranordnung dringt. Bei gleichzeitig durch den meist begrenzten Bauraum eher klein ausgeführter innerer Dichtkammer kommt es zu einem entsprechend starken Übertritt von flüssigem Schmiermittel aus der inneren Dichtkammer in die äußere Dichtkammer und von dort durch den mäanderförmigen Dichtspalt in den Bereich der Umgebung. Aus der Veröffentlichung von W. Haas: "Berührungsfreies Abdichten im Maschinenbau unter besonderer Berücksichtigung der Fanglabyrinthe", 10. Dezember 1997 (1997-12-10), Uni Stuttgart, Stuttgart 74, XP002567317 sind vom selben Autofwïe in dem oben genannten Artikel in der Fachzeitschrift Konstruktion grundlegende Überlegungen zu berührungsfreieri Wellendichtungen veröffentlicht Unter anderem werden dabei Fanglabyrinthe beschrieben. Auch hierin ist ein sogenannter "Zwickel" beschrieben, welcher ähnlich zu der zuvor genannten Veröffentlichung im Auslass beziehungsweise Ablauf aus einer Dichtkammer angeordnet ist und den Abfluss des Schmiermittels verbessert Dieser Zwickel ist dabei in beiden Fachartikeln jeweils so positioniert, dass er im Ablauf angeordnet ist und so den Ablauf im Wesentlichen in Strömungsrichtung ausrichtet. Der Raum zwischen der rotierenden Welle und dem Zwickel entspricht dabei in seiner Höhe dem zwischen Welle und Wandung der Dichtkammer befindlichen Raum.

Es ist daher die Aufgabe der vorliegenden Erfindung, eine Vorrichtung zur Abdichtung einer Lagerung, welche schnelllaufende und/oder einen großen Durchmesser aufweisende rotierende Bauteile lagert, dahingehend weiterzubilden, dass eine sichere Abdichtung bei minimalen Anforderungen an den Bauraum realisiert werden kann.

Erfindungsgemäß wird diese Aufgabe durch die im kennzeichnenden Teil von Anspruch 1 genannten Merkmale gelöst.

Dadurch, dass in der äußeren Dichtkammer wenigstens ein zweiter Ablauf vorgesehen ist, welcher oberhalb des in Umfangsrichtung tiefsten Punkts der Dichtkammer angeordnet ist, kommt es beim Betrieb des rotierenden Bauteils zu einem erheblichen Volumenstrom hin zu diesem zweiten Ablauf. Die Kombination aus dem ersten in Umfangsrichtung am tiefsten Punkt der äußeren Dichtkammer angeordneten Ablauf und dem zweiten in Umfangsrichtung weiter oben angeordneten Ablauf kann eine ausreichende Menge an flüssigem Schmiermittel aus der äußeren Dichtkammer abgeführt werden. Dadurch kommt es nicht zu einem Rückstau an Schmiermittel in der äußeren Dichtkammer, welcher durch den mäanderförmigen Dichtspalt der Labyrinthdichtung in die Umgebung gelangen könnte. Der Aufbau mit den Kombinationen aus wenigstens einer inneren Dichtkammer und einer äußeren Dichtkammer, welche erfindungsgemäß einen ' zusätzlichen Ablauf aufweist, erlaubt es also, auch bei minimalem Bauraum, die Lagerung des rotierenden Bauteils entsprechend abzudichten. Dabei sind die Rücklaufsperren so ausgebildet, dass sie den Querschnitt der äußeren Dichtkammer zu einem großen Teil versperren, wobei ein Spalt zwischen der Rücklaufsperre und dem rotierenden Bauteil verbleibt, welcher einen größeren Querschnitt aufweist, als der Dichtspalt der Labyrinthdichtung. Die Rücklaufsperre wird den Querschnitt also zu einem großen Teil, beispielsweise zu 60 - 70% versperren. Dennoch bleibt ein Spalt offen, welcher entsprechend größer ist, als der Dichtspalt in dem Bereich der Labyrinthdichtung. Somit wird sichergestellt, dass ein sich gegebenenfalls stauendes Schmiermittel eher durch diesen Spalt an der Rücklaufsperre vorbeidringt, als dass dieses durch die Labyrinthdichtung in die Umgebung gelangt

In einer besonders günstigen Ausgestaltung der Erfindung ist im Bereich des zweiten Ablaufs der äußeren Dichtkammer eine Rücklaufsperre angeordnet.

Diese Rücklaufsperre ist so ausgebildet, dass sie in der Art des im eingangs erwähnten Stand der Technik genannten Zwickels die mit dem rotierenden Bauteil umlaufende Strömung des flüssigen Schmiermittels oder eines entsprechenden Schmiermittelluftgemischs entsprechend unterbricht und durch ihre Ausgestaltung den Volumenstrom in den Ablauf leitet. Dadurch kann ein entsprechend hoher Volumenstrom gezielt abgeführt werden, so dass es nicht zu einem Aufstauen von flüssigem Schmiermittel in der äußeren Dichtkammer kommt.

In einer weiteren Ausgestaltung hiervon kann es außerdem vorgesehen sein, dass die Rücklaufsperre ein Leitelement zur gezielten Ableitung des Schmiermittelvolumenstroms in den Ablauf aufweist.

Anstelle der gemäß der Beschreibung im Stand der Technik typischerweise eher einfach ausgeführten an die Grundform eines Dreiecks erinnernden Zwickel kann die Rücklaufsperre bei diesem Ausführungsbeispiel eine zusätzliche Nase, Leitrippe oder dergleichen aufweisen, welche die Grundform der Rücklaufsperre als Leitelement verlängert, insbesondere aus der ursprünglichen Ebene des Dreiecks heraus. Das Leitelement kann dabei je nach geometrischer Ausgestaltung des Ablaufs so ausgebildet sein, dass es die bestmöglichen Bedingungen zum Einleiten des Schmiermittelvolumenstroms in den Ablauf aufweist.

In einer weiteren besonders günstigen Ausgestaltung der Erfindung kann es außerdem vorgesehen sein, dass auch im Bereich des ersten Ablaufs der äußeren Dichtkammer eine Rücklaufsperre angeordnet ist.

Auch im Bereich des am tiefsten Punkt in Umfangsrichtung angeordneten Ablaufs kann also über eine derartige Rücklaufsperre beziehungsweise einen solchen Zwickel eine Verbesserung in der Ableitung des Schmiermittetvotumenstroms erreicht werden.

Gemäß einer entsprechend vorteilhaften Weiterbildung hiervon ist es jedoch vorgesehen, diese Rücklaufsperre ohne ein Leitelement zur gezielten Ableitung des Schmiermittelvolumenstroms in den Ablauf auszubilden.

Bei Untersuchungen hat sich gezeigt, dass ein derartiges Leitelement bei der wenigstens zweiten Ablauföffnung aus der äußeren Dichtung von besonderem Vorteil ist. Bei dem im tiefsten Punkt in Umfangsrichtung'angeordneten Ablauf der äußeren Dichtkammer ist die Rücklaufsperre in Ihrer an eine Dreieck erinnernden Grundform alleine ebenfalls von entsprechendem Vorteil. Jedoch hat es sich als eher nachteilig herausgestellt, diese mit einem Leitelement zu versehen, da in diesem Bereich durch das zusätzliche Leitelement an der Rücklaufsperre der Ablauf des Schmiermittelvolumenstrom eher behindert als gefördert wird.

Eine besonders günstige Ausgestaltung des Aufbaus der erfindungsgemäßen Vorrichtung sieht es nun vor, dass zumindest ein Teil der Rücklaufsperren einstückig mit dem Gehäuse einem drehfest mit dem Gehäuse ausgebildeten Teil ausgebildet sind.

Typischerweise werden die Gehäuse und ggf. die daran befestigten Teile für derartige Lageranordnungen beziehungsweise rotierende Bauteile durch entsprechende Gussverfahren hergestellt. Mit vergleichsweise wenig Aufwand kann so einfach und effizient die Rücklaufsperre bereits in den nicht rotierenden Teil der Vorrichtung mit eingebracht werden. Es hat sich dabei außerdem gezeigt, dass für die nicht rotierenden Teile der äußeren Dichtkammern die bei üblichen Gussverfahren zu erzielenden Oberflächenqualitäten durchaus ausreichend sind, so dass hier keine Nachbearbeitung der entsprechenden Bauteile erfolgen muss. Damit können die Rücklaufsperren direkt einstückig in das Gehäuse mit eingegossen werden, ohne eine Nachbearbeitung, beispielsweise durch Drehen, zu verhindern. Die vergleichsweise komplexe Ausgestaltung der äußeren Dichtkammer mit den Rücklaufsperren kann in der Herstellung durch Gießen somit einfach und effizient realisiert werden.

Gemäß einer besonders günstigen Weiterbildung der Vorrichtung übernehmen die Rücklaufsperren zusätzlich die Aufgabe einer Verdrehsicherung.

Sie können dabei einstückig mit dem Gehäuse oder später in das Gehäuse eingebracht werden. Sie sind aber in jedem Fall so ausgebildet, dass sie weitere Bauelemente, welche gegenüber dem rotierenden Bauteil ortsfest verbleiben sollen, wie beispielsweise einen Dichtring, zwischen der äußeren Kammer und einer inneren Kammer oder auch einen Labyrinthdichtung der äußeren Kammer mit fixieren und diesen drehfest gegenüber dem rotierenden Bauteil im Gehäuse halten. Dadurch können alternative Elemente, wie beispielsweise Bolzen oder dergleichen eingespart werden.

Gemäß einer besonders günstigen und vorteilhaften Ausgestaltung der Erfindung ist der wenigstens eine zweite Ablauf in Rotationsrichtung des rotierenden Bauteils auf den ersten Ablauf folgend in Umfangsrichtung in der unteren Hälfte der äußeren Dichtkammer angeordnet.

Durch diese Anordnung kann ein entsprechender Schmiermittelvolumenstrom in Richtung des zweiten Ablaufs ausgehend von einem Bereich des ersten Ablaufs, in dem sich gegebenenfalls ein Schmiermittelvolumenstrom anstaut, durch die Rotation des rotierenden Bauteils begünstigt werden, da das Bauteil das Luft-Schmiermittel-Gemisch mitreißt.

Tatsächlich hat sich gezeigt, dass bei entsprechenden Aufbauten ein starker Schmiermittelvolumenstrom aus dem Bereich des ersten Ablaufs in den Bereich des zweiten erfindungsgemäßen Ablaufs erfolgt. Durch diesen starken Schmiermittelvolumenstrom, welcher nochmals verstärkt wird, wenn der zweite Ablauf in Rotationsrichtung des rotierenden Bauteils auf den ersten folgend angeordnet ist, kommt es zu einer idealen Ableitung von Schmiermittel aus der äußeren Dichtkammer, so dass die Anordnung an sich nach außen zur Umgebung hin vollkommen dicht bleibt. Außerdem ist eine Anordnung in der entsprechenden unteren Hälfte der äußeren Dichtkammer besonders sinnvoll, da hierdurch der Schmiermittelvolumenstrom nicht oder nur minimal gegen die Schwerkraft gefördert werden muss, bevor dieser abläuft.

Prinzipiell sind weitere Abläufe denkbar, welche um das rotierende Bauteil verteilt sind, oder welche insbesondere in beide Richtungen in der unteren Hälfte der äußeren Dichtkammer angeordnet sind. Dies kann insbesondere dann Sinn machen, wenn das rotierende Bauteil in verschiedene Richtungen drehend betrieben wird. Dann kann über eine Anordnung von zwei zweiten Abläufen symmetrisch zum ersten Ablauf in der unteren Hälfte der äußeren Dichtkammer die bestmögliche Wirkung unabhängig von der Drehrichtung des rotierenden Bauteils entsprechend erzielt werden.

In einer günstigen Ausgestaltung der Erfindung ist es außerdem vorgesehen, dass der wenigstens eine Ablauf in wenigstens einer der inneren Dichtkammern oberhalb des in Umfangsrichtung tiefsten Punkts der Dichtkammer angeordnet ist.

Je nach Bauraum können dabei eine oder mehrere innere Dichtkammern vorhanden sein, wobei - insbesondere beim beschränkten Bauraum - durchaus eine innere Dichtkammer ausreicht. Jede dieser inneren Dichtkammern kann dabei einen oder mehr Abläufe, typischerweise zwei Abläufe, aufweisen. In zumindest einer der inneren Dichtkammern, insbesondere in der innersten, sind diese Abläufe jeweils oberhalb des in Umfangsrichtung tiefsten Punkts der Dichtkammer angeordnet, so wird es nach dem Abbremsen des rotierenden Bauteils, also wenn dieses im Stillstand ist, zu einer entsprechenden Ansammlung von flüssigem Schmiermittel im Bereich zwischen dem tiefsten Punkt der Dichtkammer in Umfangsrichtung und den Abläufen kommen. Dieses in der oder den inneren Dichtkammern verbleibende flüssige Schmiermittel stellt dann eine Mindestschmierung sicher, welche insbesondere beim Anlauf des rotierenden Bauteils von besonderem Vorteil ist, da erst mit Erreichen einer bestimmten Mindestdrehzahl des rotierenden Bauteils die Schmierung über die durch die Lager typischerweise auftretende Förderwirkung eintritt. Die entsprechende Anordnung der Ablauföffnungen stellt somit eine Mindestschmierung beziehungsweise Anlaufschmierung für das rotierende Bauteil sicher.

Weitere vorteilhafte Ausgestaltungen der Erfindung ergeben sich aus den restlichen Unteransprüchen und aus dem Ausführungsbeispiel, welches nachfolgend anhand der Figuren näher erläutert wird.

Dabei zeigen:
- Figur 1: einen Längsschnitt durch ein rotierendes Bauteil und dessen Lagerung sowie die Abdichtung der Lagerung;
- Figur 2: eine Darstellung der Dichtkammer mit prinzipmäßig angedeuteten Abläufen im Querschnitt;
- Figur 3: die Darstellung einer Rücklaufsperre im Querschnitt; und
- Figur 4: zwei Varianten von möglichen Rücklaufsperren.

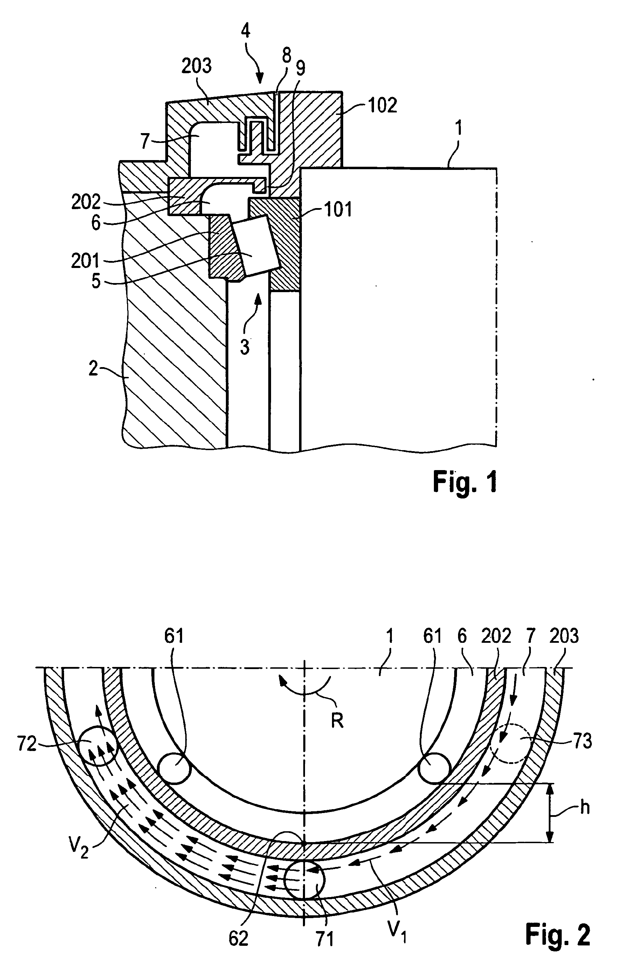

In Figur 1 ist ein rotierendes Bauteil 1 in einem nicht rotierenden Gehäuse 2 dargestellt. Dementsprechende sind nachfolgend die rotierenden Bauteile jeweils mit Bezugszeichen versehen, welche mit 1 beginnen, während die nicht rotierenden Bauteile mit Bezugszeichen versehen sind, die mit 2 beginnen.

Das rotierende Bauteil 1 soll dabei eine Welle in einem Antriebssystem sein, welches einen entsprechend großen Durchmesser von typischerweise mehr als 300 mm aufweist. Sie läuft relativ schnell, so dass sich am äußeren Umfang der Welle Umfangsgeschwindigkeiten ergeben, welche größer oder deutlich größer als 30 m/s sind. Neben dem rotierenden Bauteil 1 rotiert mit diesem eine Lagerschale 101, welche hier die eine Lagerschale 101 eines als Kegelrollenlager ausgebildeten Lagers 3 ist. Das Lager 3 ist mit einem nicht dargestellten Gegenlager in so genannter X-Anordnung ausgeführt und lagert das rotierende Bauteil 1. Zusammen mit der Lagerschale 101 und dem rotierenden Bauteil 1 rotiert außerdem ein rotierender Labyrinthdichtring 102 als Teil einer Vorrichtung 4 zur Abdichtung des Lagers 3. Das Gehäuse 2 weist neben dem eigentlichen Gehäuse ebenfalls eine Lagerschale 201 für Wälzkörper 5 des Lagers 3 auf. Außerdem weist es einen Dichtring 202 auf, welcher eine erste innere Dichtkammer 6 gegenüber einer äußeren Dichtkammer 7 entsprechend abdichtet. Die äußere Dichtkammer 7 wird dabei von einem feststehenden Labyrinthdichtring 203 begrenzt, welcher zusammen mit dem rotierenden Labyrinthdichtririg 102 eine Labyrinthdichtung ausbildet. Die beiden Labyrinthdichtringe 102 und 203 berühren einander dabei nicht, bilden jedoch einen im Wesentlichen mäanderförmigen Labyrinthdichtspalt 8 zwischen sich aus, welcher einen flüssigen Schmiermittel oder einem Luft-Schmiermittel-Gemisch, das ihn durchströmen will, einen vergleichsweise hohen Druckverlust entgegensetzt. Die innere Dichtkammer 6 und die äußere Dichtkammer 7 sind wie bereits erwähnt durch den Dichtring 202 gegeneinander abgedichtet, wobei auch dieser Dichtring gegenüber den rotierenden Bauteilen 101 und 102 berührungslos ausgebildet ist und lediglich über einen Dichtspalt 9 entsprechend abgedichtet ist. Die innere Dichtkammer 6 und die äußere Dichtkammer 7 korrespondieren also über diesen Dichtspalt 9 miteinander.

Im Bereich des Gehäuses 2 liegt nun ein flüssiges Schmiermittel, insbesondere ein Öl vor. Aufgrund der Förderwirkung, die durch das rotierende Lager 3, und insbesondere die X-Anordnung des Lagers 3 erzeugt wird, wird ständig ein flüssiger Schmiermittelvolumenstrom durch das Lager 3 hindurch in den Bereich der inneren Dichtkammer 6 gefördert.

In Figur 2 ist nun ein stark schematisierter Querschnitt durch die beiden Dichtkammern 6, 7 dargestellt. Auch hier ist im Mittelpunkt das rotierende Bauteil 1 zu erkennen, welches im hier dargestellten Beispiel in Richtung des Uhrzeigersinns rotiert, wie es durch den Pfeil R symbolisiert ist. Im Anschluss an das rotierende Bauteil 1 ist die innere Dichtkammer 6 zu erkennen, welche von dem Dichtring 202 gegenüber der äußeren Dichtkammer 7 abgetrennt wird, welche ihrerseits wiederum durch den Labyrinthdichtring 203 gegenüber der Umgebung abgedichtet ist. Auch wenn dies in Figur 2 nicht explizit dargestellt ist, sind im Bereich der jeweiligen Dichtkammern 6 und 7 neben den hier dargestellten nicht rotierenden Elementen 202 und 203 auch rotierende Wandungen insbesondere der Lagerschale 101 und des Labyrinthdichtelements 102 vorhanden. Diese werden das flüssige Schmiermittel während des Betriebs in der Rotationsrichtung R des rotierenden Bauteils 1 mitreißen und so für einen Volumenstrom in Umfangsrichtung sorgen, welcher hier - lediglich in der äußeren Dichtkammer - angedeutet und mit V₁ bezeichnet ist.

Wie bereits erwähnt wird durch die Förderwirkung des Lagers 3 im Bereich der inneren Dichtkammer 6 nun ein hohes Aufkommen an flüssigem Schmierstoff anfallen. Aufgrund der begrenzten Baugröße des Lagers kann die Dichtkammer 6 jedoch im Allgemeinen nicht mit einem großen Volumen ausgeführt werden. Um den Ölvolumenstrom aus der Dichtkammer 6 abzuführen, sind dafür zwei Abläufe 61 vorgesehen, durch welche das sich in der Dichtkammer 6 sammelnde flüssige Schmiermittel zumindest teilweise in den Bereich des Gehäuses 2 zurückgeführt werden kann. Die beiden Abläufe 61 sind dabei nicht in dem in Umfangsrichtung tiefsten Punkt 62 der inneren Dichtkämmer 6 angeordnet, sondern in einer entsprechenden Höhe h über diesen tiefsten Punkt. Dies hat den Sinn, dass beim Stillstand des rotierenden Bauteils 1 ein Restvolumen an Schmiermittel, welches sich aus dem Querschnitt der inneren Dichtkammer 6 unterhalb der Höhe h ergibt, in der inneren Dichtkammer 6 verbleibt. Dieses Restvolumen an Schmiermittel kann zur Schmierung beim Anlaufen des rotierenden Bauteils 1 genutzt werden.

Das Schmiermittel, welches im regulären Betrieb nicht durch die Abläufe 61 beim Betrieb des rotierenden Bauteils 1 abgeführt werden kann, wird, wie bereits bei der Darstellung der Figur 1 erläutert, über den Dichtspalt 9 in die äußere Dichtkammer 7 abfließen. Auch in der äußeren Dichtkammer gibt es im Bereich des Labyrinthdichtrings 102 rotierende Wandungen, welche mit dem das rotierende Bauteil 1 umlaufen. Dementsprechend wird sich hier der Volumenstrom V₁ einstellen, welcher mit der Rotation R in Umfangsrichtung durch die äußere Dichtkammer 7 verläuft. In der äußeren Dichtkammer 7 ist nun ein Ablauf 71 vorgesehen, welcher am tiefsten Punkt der Dichtkammer 7 in Umfangsrichtung gesehen angeordnet ist. Dieser Ablauf 71 am tiefsten Punkt hat die Aufgabe, Schmieröl, welches während des Betriebs in die Dichtkammer 7 gelangt, abzuleiten. Außerdem soll durch diesen Ablauf auch Schmieröl im Stillstand aus dem Bereich der Dichtkammer 6, welches durch den Dichtspalt 9 in den Bereich der Dichtkammer 7 gelangt abgeführt werden. Um hier kein oder nur wenig Restschmiermittel im Bereich der äußeren Dichtkammer zu behalten, liegt der Ablauf 71 am in Umfangsrichtung tiefsten Punkt. Da der Querschnitt des Ablaufs 71 im Allgemeinen einen geringeren Druckverlust darstellen wird als der mäanderförmige Labyrinthdichtspalt 8, wird eventuell anfallendes Schmiermittel typischerweise durch den Ablauf 71 ablaufen und somit nicht durch den Labyrinthdichtspalt in die Umgebung gelangen.

Bei schnell laufenden Wellen mit Umfangsgeschwindigkeiten von Mehr als 30 m/s am äußeren Umfang und einem entsprechend hohen Druck im Bereich der inneren Dichtkammer 6 kommt es im Betrieb nun jedoch zu einem relativ großen Volumenstrom aus dem Bereich der inneren Dichtkammer 6 in den Bereich der äußeren Dichtkammer 7. Einen derartig großen Volumenstrom kann die Ablauföffnung 71 typischerweise nicht aufnehmen, so dass sich Schmiermittel staut und es zu einer entsprechenden Undichtheit der Vorrichtung kommen kann.

Erfindungsgemäß ist daher ein zweiter Ablauf 72 vorgesehen. Dieser zweite Ablauf 72 ist in idealer Weise in der Rotationsrichtung R des rotierenden Bauteils 1 nach dem Ablauf 71 angeordnet. Dadurch kann ein von der Rotation des rotierenden Bauteils 1 mitgerissener Volumenstrom in idealer Weise von dem tiefsten Punkt und damit von dem Punkt, in dem sich die meiste Flüssigkeit staut, in den Bereich des zweiten Ablaufs 72 mitgerissen werden. Tatsächlich haben Versuche gezeigt, dass es bei einem derartigen Aufbau zu einem erheblichen - hier mit Pfeilen angedeuteten - Volumenstrom V₂ in Richtung des zweiten Ablaufs kommt. Durch den zweiten Ablauf 72 kann dieser Volumenstrom dann in den Bereich des Gehäuses 2 zurückgeführt werden. Der Aufbau ermöglicht es so, dass kein Schmiermittel durch den mäanderförmigen Dichtspalt 8 hindurch austritt und der Aufbau somit dicht ist.

Neben dem hier dargestellten Ablauf 72, welcher üblicherweise in der unteren Hälfte des Umfangs angeordnet sein wird, um keine weite Förderstrecke gegen die Schwerkraft zu haben, kann außerdem ein weiterer Ablauf 73 vorgesehen sein, welcher derselben Gesetzmäßigkeit folgt wie der bereits beschriebene Ablauf 72. In dem in Figur 2 dargestellten Ausführungsbeispiel ist dieser Ablauf 73 dabei auf der in Rotationsrichtung R des rotierenden Bauteils 1 anderen Seite des Ablaufs 71 angebracht. Er wird auch hier eine gewisse Wirkung zeigen, jedoch nicht die starke gewünschte Wirkung, wie der zweite Ablauf 72. Wird das rotierenden Bauteil1 nun jedoch mit alternierenden Rotationsrichtungen eingesetzt, kann der hier optional eingezeichnete dritte Ablauf 73 ideal genutzt werden, um bei einer Rotation der Welle entgegen der hier dargestellten Rotationsrichtung R einen idealen Ablauf des flüssigen Schmiermittelvolumenstroms sicherzustellen.

Alternativ dazu können auch bei nur einer Rotationsrichtung R des rotierenden Bauteils 1 mehrere der zweiten Abläufe, z.B. gleich um den Umfang verteilt oder in dichter Folge hintereinander eingesetzt werden, wenn eine entsprechend hohe Menge an anfallenden Schmiermittel dies erforderlich macht.

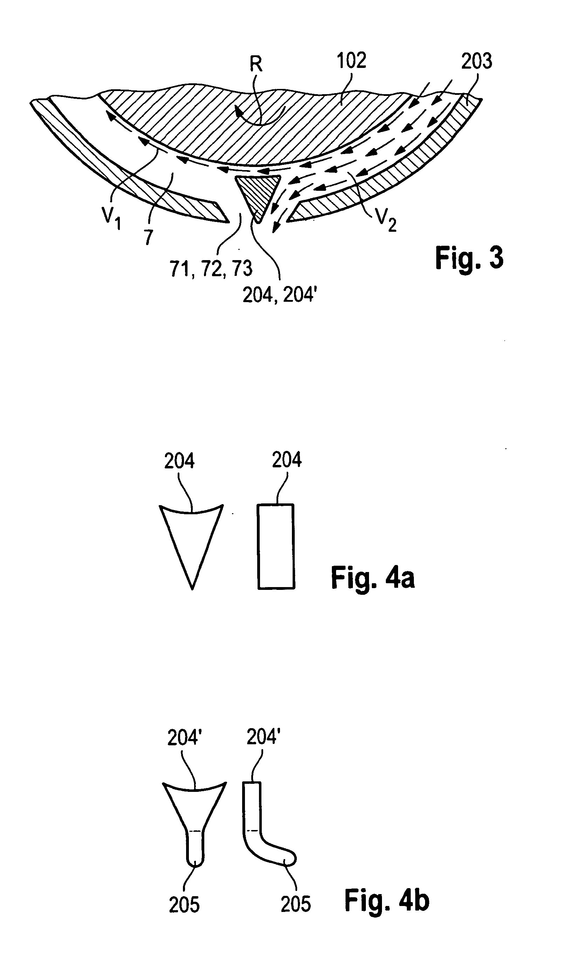

In Figur 3 ist nun eine detaillierte Darstellung eines solchen Ablaufs 71, 72 oder 73 zu erkennen. Dabei ist im Bereich des Ablaufs eine Rücklaufsperre 204 angeordnet, welche ebenfalls drehfest gegenüber dem rotierenden Bauteil 1 oder wie in Figur 3 dargestellt dem rotierenden Labyrinthdichtring 102 ausgebildet ist. Diese Rücklaufsperre 204 wird im eingangs genannten Stand der Technik gelegentlich auch als sogenannter Zwickel bezeichnet. Die Rücklaufsperre 204 ist dabei so ausgebildet, dass sie ca. 60 - 70% des Querschnitts der äußeren Dichtkammer 7 abdeckt. Sie lässt lediglich einen entsprechenden Spalt zwischen sich und dem rotierenden Bauteil 1 bzw. in diesem Fall dem Bauteil 102. Dieser Spalt wird jedoch einen deutlich größeren Querschnitt aufweisen, als der entsprechende mäanderförmige Dichtspalt 8 der Labyrinthdichtung, so dass im Zweifelsfall das Schmiermittel leichter durch diesen Spalt gelangt, als durch den mäanderförmigen Dichtspalt 8 und somit nach wie vor die Dichtheit des Gesamtsystems sichergestellt ist. Ansonsten wird die Rücklaufsperre 204, wie aus dem Stand der Technik bekannt, die Ableitung des flüssigen Schmiermittels aus dem Bereich der äußeren Dichtkammer 7 verbessern und somit zur Abdichtung des Gesamtsystems beitragen. Dabei ist das Volumen der inneren Dichtkammer 6 entsprechend kleiner ausgestaltet, als das der äußeren Dichtkammer 7. In die äußere Dichtkammer 7 übertretendes flüssiges Schmiermittel wird durch die Abläufe 71 und 72 sowie gegebenenfalls den Ablauf 73 abgeführt, ohne durch den mäanderförmigen Dichtspalt 8 in den Bereich der Umgebung zu gelangen.

In Figur 4 sind nun zwei unterschiedliche Bauformen von solchen Rücklaufsperren dargestellt. Figur 4a zeigt dabei den üblichen Aufbau einer derartigen Rücklaufsperre 204 in einer Draufsicht und einer Seitenansicht. Die Rücklaufsperre 204 ist dabei im Wesentlichen in der Art eine Dreiecks mit entsprechender Dicke ausgebildet. Eine derartige Rücklaufsperre 204 kann insbesondere im Bereich des Ablaufs 71 eingesetzt werden und hat dabei die aus dem Stand der Technik bekannten Vorteile. In Figur 4b ist eine Rücklaufsperre 204' zu erkennen, welche ebenfalls wieder in einer Draufsicht und einer Seitenansicht dargestellt ist. Gegenüber der herkömmlichen Rücklaufsperre 204 in Figur 4a unterscheidet sich diese dadurch, dass sie zusätzlich ein Leitelement 205 aufweist, welches der gezielten Ableitung des Schmiermittelvolumenstroms in den Ablauf dient. Es hat sich gezeigt, dass eine derartige Rücklaufsperre 204' mit Leitelement 205 insbesondere im Bereich des Ablaufs 72 und gegebenenfalls des Ablaufs 73 besonders vorteilhaft eingesetzt werden kann. Da die vom Ablauf 72 beziehungsweise 73 in das Gehäuse 2 zurückführenden Leitungselemente typischerweise aus der durch die dreiecksartige Form bestimmten Hauptebene der Rücklaufsperre 204' herausführen, kann ein ebenfalls aus der Hautebene der Rücklaufsperre 204' herausführendes Leitelement 205 die Ableitung eines derartigen Volumenstroms des flüssigen Schmiermittels ideal unterstützen.

Die in den Figuren 3 und 4 dargestellten Rücklaufsperren 204 und 204' können dabei bei der Ausgestaltung des Gehäuses 2 als Gussteil ideal in das Gehäuse mit integriert werden, indem diese bereits in der Gussform entsprechend vorgesehen werden. Alternativ dazu können sie auch entsprechend eingeschraubt, eingepresst oder vergleichbar befestigt werden. Die Rücklaufsperren 204 und 204' können außerdem zusätzliche Aufgaben übernehmen, indem sie beispielsweise den Dichtring 202 oder den Labyrinthdichtring 203 verdrehsicher in dem Gehäuse fixieren, so dass diese sich nicht mit dem rotierenden Bauteil 1 oder mit mit diesem mitlaufenden Elementen 102, 103 entsprechend verdrehen kann. Durch die Verwendung der Rücklaufsperren 204 und 204' als Verdrehsicherungen können weitere ansonsten dafür benötigte Elemente wie beispielsweise Bolzen oder dergleichen eingespart werden.

Die Erfindung erlaubt es so, mit einem einfachen aber effizienten Aufbau eine deutliche Verbesserung der Abdichtung, insbesondere bei schnell laufenden Wellen und/oder großen Wellendurchmessern zu realisieren. Insbesondere kann sie verwendet werden, um beispielsweise Gelenkwellen oder Antriebswellen in Schienenfahrzeugen oder dergleichen zu lagern und abzudichten. Unter großen Wellen sind dabei Wellen mit einem Durchmesser von mehr als 300 mm zu verstehen. Unter schnell laufenden Wellen solche, die an ihrem äußeren Umfang Umfangsgeschwindigkeiten von mehr und deutlich mehr als 30 m/s erreichen.

## Patentansprüche

1. Vorrichtung zur Abdichtung einer mit einem flüssigen Schmiermittel geschmierten Lagerung eines rotierenden Bauteils mit:
wenigstens einer inneren in Umfangsrichtung umlaufenden Dichtkammer (6) und
einer äußeren in Umfangsrichtung umlaufenden Dichtkammer (7), wobei die Dichtkammern (6,7) über Dichtspalte (9) korrespondieren; und
die äußere Dichtkammer (7) über eine Labyrinthdichtung (8) gegenüber der Umgebung abgedichtet ist; wobei
die Dichtkammern (6,7) jeweils wenigstens einen Ablauf (61,71) in ein Gehäuse des rotierenden Bauteils (1) aufweisen; und wobei
der Ablauf (71) in der äußeren Dichtkammer (7) am bei bestimmungsgemaßern Einsatz in Umfangsrichtung tiefsten Punkt der Dichtkammer (7) angeordnet ist; wobei
in der äußeren Dichtkammer (7) wenigstens ein zweiter Ablauf (72, 73). vorgesehen ist, welche oberhalb des im Umfangsrichtung tiefsten Punkts der Dichtkammer (7) angeordnet ist, **dadurch gekennzeichnet, dass**
in dem Bereich des wenigstens einen zweiten Ablaufs (72, 73) der äußeren Dichtkammer (7) eine Rücklaufsperre (204, 204') angeordnet ist; und wobei die Rücklaufsperre (204, 204') den Querschnitt der äußeren Dichtkammer (7) zu einem großen Teil versperrt, wobei ein Spalt zwischen dem Rücklaufelement (204, 204') und dem rotierenden Bauteil (1) verbleibt, welcher einen größeren Querschnitt aufweist, als der Dichtspalt (8) der Labyrinthdichtung.

2. Vorrichtung nach Anspruch 1, **dadurch gekennzeichnet, dass** die Rücklaufsperre (204, 204') ein Leitelement (205) zur gezielten Ableitung des Schmiermittelvolumenstroms in den wenigstens einen zweiten Ablauf (72, 73) aufweist.

3. Vorrichtung nach einem der Ansprüche 1 oder 2, **dadurch gekennzeichnet, dass** in dem Bereich des Ablaufs (71) der äußeren Dichtkammer (7) eine Rücklaufsperre (204) angeordnet ist.

4. Vorrichtung nach Anspruch 3, **dadurch gekennzeichnet, dass** die Rücklaufsperre (204) ohne ein Leitelement (205) zur gezielten Ableitung des Schmiemnittelvolumenstroms in den Ablauf (71) ausgebildet ist.

5. Vorrichtung nach einem der Ansprüche 1 bis 4, **dadurch gekennzeichnet, dass** zumindest ein Teil der Rücklaufsperren (204, 204') einstückig mit dem Gehäuse (2) oder einem drehfest mit dem Gehäuse (2) ausgebildeten Teil (201,203) ausgebildet sind.

6. Vorrichtung nach einem der Ansprüche 1 bis 5, **dadurch gekennzeichnet, dass** zumindest ein Teil der Rücklaufsperren (204, 204') als Verdrehsicherung für weitere Bauteile der Vorrichtung ausgebildet ist.

7. Vorrichtung nach einem der Ansprüche 1 bis 6, **dadurch gekennzeichnet, dass** der wenigstens eine zweite Ablauf (72, 73) in Rotationsrichtung (R) des rotierenden Bauteils (1) auf den ersten Ablauf (71) folgend in Umfangsrichtung im der unteren Hälfte der äußeren Dichtkammer (7) angeordnet ist.

8. Vorrichtung nach einem der Ansprüche 1 bis 7, **dadurch gekennzeichnet, dass** der wenigstens eine Ablauf (61) wenigstens einer der inneren Dichtkammern (6) oberhalb des im Umfangsrichtung tiefsten Punkts (62) der inneren Dichtkammer (6) angeordnet ist.

9. Vorrichtung nach einem der Ansprüche 1 bis 8, **dadurch gekennzeichnet, dass** die innere Dichtkammer (6) auf ihrer einen Seite zu der Lagerung (3) hin offen ausgebildet ist, während ihre andere Seite mit einem Dichtspalt (9) korrespondierend zu der nächsten inneren oder der äußeren Dichtkammer (7) ausgebildet ist.

10. Vorrichtung nach einem der Ansprüche 1 bis 9, **dadurch gekennzeichnet, dass** die Lagerung (3) als Wälzlagerung in X - Anordnung ausgebildet ist.

11. Vorrichtung nach einem der Ansprüche 1 bis 10, **dadurch gekennzeichnet, dass** das rotierende Bauteil (1) als schnelllaufende Welle und/oder als Welle mit großem Durchmesser ausgebildet ist.

12. Vorrichtung nach einem der Ansprüche 1 bis 11, **dadurch gekennzeichnet, dass** das rotierende Bauteil (1) im regulären Betrieb am äußeren Umfang eine Umfangsgeschwindigkeit von mehr als 30 m/s aufweist.

13. Vorrichtung nach einem der Ansprüche 1 bis 12, **dadurch gekennzeichnet, dass** die äußere Dichtkammer (7) ein größeres Volumen aufweist, als die benachbarte der wenigstens einen inneren Dichtkammern (6).

## Claims

1. A device for sealing a bearing assembly lubricated with a liquid lubricant of a rotating component with:
at least one inner sealing chamber (6) rotating in the peripheral direction and
one outer sealing chamber (7) rotating in the peripheral direction, whereas the sealing chambers (6, 7) correspond via sealing gaps (9); and the outer sealing chamber (7) is sealed off with respect to the environment via a labyrinth seai (8); wherein
the sealing chambers (6, 7) have each at least one outlet (61, 71) in a housing of the rotating component (1); and whereas
the outlet (71) is arranged in the outer sealing chamber (7) by the lowest point of the outer sealing chamber (7) along the periphery during intended use; whereas at least one second outlet (72, 73) is provided in the outer sealing chamber (7), which is arranged above the lowest point of the sealing chamber (7) in the peripheral direction, **characterised in that** a return stop (204, 204') is arranged in the area of said at least one second outlet (72, 73) of the outer sealing chamber (7); and whereas the return stop (204, 204') blocks the cross section of the outer sealing chamber (7) to a large extent, whereas a gap remains between the return member (204, 204') and the rotating component (1), which has a larger cross section than the sealing gap (8) of the labyrinth seal.

2. The device according to claims 1, **characterised in that** the return stop (204, 204') has a guiding element (205) for targeted diversion of the lubricant volume flow into said at least one second outlet (72, 73).

3. The device according to one of the claims 1 or 2, **characterised in that** a return stop (204) is arranged in the area of the outlet (71) of the outer sealing chamber (7).

4. The device according to claim 3, **characterised in that** the return stop (204) is formed without a guiding element (205) for targeted diversion of the lubricant volume flow into the outlet (71).

5. A device according to any of the claims 1 to 4, **characterised in that** at least one portion of the return stops (204, 204') are formed as a single piece with the housing (2) or with a portion (201, 203) designed in a torque-proof manner with the housing (2).

6. A device according to any of the claims 1 to 5, **characterised in that** at least one portion of the return stops (204, 204') is designed as an anti-twist device for additional components of the device.

7. A device according to any of the claims 1 to 6, **characterised in that** said at least one second outlet (72, 73) of the rotating component (1) is provided in the second half of the outer sealing chamber (7) in rotational direction (R) towards the first outlet (71) in the peripheral direction.

8. A device according to any of the claims 1 to 7, **characterised in that** said at least one outlet (61) of at said least one of the inner sealing chambers (6) is arranged above the lowest point (62), in the peripheral direction, of the inner sealing chamber (6).

9. A device according to any of the claims 1 to 8, **characterised in that** the inner sealing chamber (6) is open to the bearing assembly (3) on one of its sides, while its other end is formed with a sealing gap (9) corresponding to the next inner or outer sealing chamber (7).

10. A device according to any of the claims 1 to 9, **characterised in** z that the bearing assembly (34) is designed as a roller bearing assembly with a X-configuration.

11. A device according to any of the claims 1 to 10, **characterised in that** the rotating component (1) is formed as a high-speed shaft and/or as a shaft with large diameter.

12. A device according to any of the claims 1 to 11, **characterised in that** the rotating component (1) in regular rotation exhibits a speed of more than 30 m/s on the external circumference.

13. A device according to any of the claims 1 to 12, **characterised in that** the outer sealing chamber (7) has a larger volume than the neighbouring volume of at least one of said inner sealing chambers (6).

## Revendications

1. Dispositif d'étanchéité d'un ensemble roulement d'un composant rotatif, lubrifié à l'aide d'un lubrifiant liquide, comprenant:
au moins une chambre d'étanchéité (6) interne rotative dans le sens de la circonférence et
une chambre d'étanchéité (7) externe rotative dans le sens de la circonférence, dans lequel les chambres d'étanchéité (6, 7) correspondent par le biais de fentes d'étanchéité (9); et
la chambre d'étanchéité externe (7) est étanche par rapport à l'environnement par le biais d'un joint labyrinthe (8); dans lequel les chambres d'étanchéité (6, 7) présentent chacune au moins un écoulement (61, 71) vers un logement du composant rotatif (1); et dans lequel l'écoulement (71) est disposé dans la chambre d'étanchéité externe (7) au niveau du point le plus bas de la chambre d'étanchéité (7) dans le sens de la circonférence dans l'application prévue; dans lequel au moins un second écoulement (72, 73) est aménagé dans la chambre d'étanchéité externe (7), qui est agencé au-dessus du point le plus bas de la chambre d'étanchéité (7) dans le sens de la circonférence, **caractérisé en ce qu'**un blocage anti-retour (204, 204') est agencé dans la zone dudit au moins un second écoulement (72, 73) de la chambre d'étanchéité externe (7); et
dans lequel le blocage anti-retour (204, 204') bloque dans une grande partie la section transversale de la chambre d'étanchéité externe (7), dans lequel il reste une fente entre l'élément anti-retour (204, 204') et le composant rotatif (1), qui présente une section transversale plus grande que la fente d'étanchéité (8) du joint labyrinthe.

2. Dispositif selon la revendication 1, **caractérisé en ce que** le blocage anti-retour (204, 204') présente un élément de guidage (205) pour dévier de manière ciblée du masse volumique de lubrifiant vers ledit au moins un second écoulement (72, 73).

3. Dispositif selon l'une des revendications 1 ou 2, **caractérisé en ce qu'**un blocage anti-retour (204) est disposé dans la zone d'écoulement (71) de la chambre d'étanchéité externe (7).

4. Dispositif selon la revendication 3, **caractérisé en ce que** le blocage anti-retour (204) ne présente pas d'élément de guidage (205) pour dévier de manière ciblée du masse volumique de lubrifiant vers ledit écoulement (71).

5. Dispositif selon l'une des revendications 1 à 4, **caractérisé en ce qu'**au moins une partie des blocages anti-retour (204, 204') sont d'une pièce avec le logement (2) ou bien avec une pièce bloquée en rotation avec le logement (2).

6. Dispositif selon l'une des revendications 1 à 5, **caractérisé en ce qu'**au moins une partie des blocages anti-retour (204, 204') est conçue comme blocage en rotation pour d'autres composants du dispositif.

7. Dispositif selon l'une des revendications 1 à 6, **caractérisé en ce que** ledit au moins un second écoulement (72, 73) dans le sens de rotation (R) du composant rotatif (1) est disposé dans la moitié inférieure de la chambre d'étanchéité externe (7) dans le sens de la circonférence vers le premier écoulement (71).

8. Dispositif selon l'une des revendications 1 à 7, **caractérisé en ce que** ledit au moins un écoulement (61) d'au moins l'une des chambres d'étanchéité internes (6) est disposé au-dessus du point le plus bas (62) de la chambre d'étanchéité interne (6) dans le sens de la circonférence.

9. Dispositif selon l'une des revendications 1 à 8, **caractérisé en ce que** la chambre d'étanchéité interne (6) est ouverte vers l'ensemble roulement (3) sur l'un de ses côtés, tandis que son autre côté est pourvu d'une fente d'étanchéité (9) correspondant à la chambre d'étanchéité (7) externe ou la chambre d'étanchéité (7) interne suivante.

10. Dispositif selon l'une des revendications 1 à 9, **caractérisé en ce que** l'ensemble roulement (3) est conçu comme un palier à roulements configuré en X.

11. Dispositif selon l'une des revendications 1 à 10, **caractérisé en ce que** le composant rotatif (1) est conçu comme arbre à rotation rapide et/ou comme arbre de grand diamètre.

12. Dispositif selon l'une des revendications 1 à 11, **caractérisé en ce que** le composant rotatf (1) en service normal présente une vitesse de rotation de plus de 30 m/s au niveau de la circonférence externe.

13. Dispositif selon l'une des revendications 1 à 12, **caractérisé en ce que** la chambre d'étanchéité externe (7) présente un volume plus important que le volume voisin d'au moins l'une des chambres d'étanchéité internes (6).
